# EUROPÄISCHE PATENTSCHRIFT

(11) **EP 0 558 808 B1**
(45) Veröffentlichungstag und Bekanntmachung des Hinweises auf die Patenterteilung: **10.06.1998**
(21) Anmeldenummer: 92120264.4
(22) Anmeldetag: 27.11.1992
(51) Int. Cl.: G01K 1/10

(54) **Vorrichtung zur Messung der Temperatur von Metallschmelzen**
Device for measuring the temperature of metal melts
Dispositif pour mesurer la température de métaux en fusion

(30) Priorität: 06.03.1992 DE 4207317
(43) Veröffentlichungstag der Anmeldung: 08.09.1993
(73) Patentinhaber: Heraeus Electro-Nite International N.V., 2000 Antwerpen (BE)
(72) Erfinder: Kendall, Martin, Sheffield (GB)
(74) Vertreter: Kühn, Hans-Christian

(56) Entgegenhaltungen:
- DE-A- 1 648 261
- DE-C- 834 757
- GB-A- 1 113 460
- US-A- 5 071 258
- PATENT ABSTRACTS OF JAPAN vol. 10, no. 237 (P-487)(2293) 15. August 1986 & JP-A-61 068 525 ( TOSHIBA CERAMICS CO LTD ) 8. April 1986
- INDUSTRIAL LABORATORY Bd. 50, Nr. 4, April 1984, NEW YORK US Seiten 385 - 387 V.N. ZHUCHIN E.A. 'PROTECTIVE SHEATH FOR THERMOCOUPLES MEASURING THE TEMPERATURE'

## Beschreibung

Die Erfindung betrifft eine Vorrichtung zur Temperaturmessung in Metallschmelzen mit einem Thermoelement, welches in einem einseitig geschlossenen Rohr angeordnet ist, wobei die heiße Lötstelle des Thermoelementes in der Nähe des geschlossenen Endes des Rohres angeordnet ist, und mit einem äußeren Schutzkörper, der das einseitig geschlossene Rohr unter Bildung eines ein Metalloxidpulver enthaltenden Ringraumes zwischen dem einseitig geschlossenen Rohr und der inneren Oberfläche des Schutzkörpers umschließt, wobei der Schutzkörper im wesentlichen aus hitzebeständigem Metalloxid und Graphit besteht.

Eine derartige Vorrichtung ist aus GB-A-2193375 bekannt. Hier ist beschrieben, daß das Thermoelement von einem Metallrohr, insbesondere von Molybdän umgeben ist. Das Molybdänrohr ist zusätzlich von einer oxidischen Beschichtung umgeben.

Ähnliche Vorrichtungen sind beispielsweise aus dem deutschen Gebrauchsmuster GM 74 19 633 bekannt. In der hier beschriebenen Anordnung, ist ein einseitig geschlossenes Rohr, welches ein Thermoelement umgibt, in einen Schutzkörper aus hitzebeständigem Metalloxid und Graphit eingesetzt, wobei zwischen dem einseitig geschlossenen Rohr und dem Schutzkörper ein Ringspalt gebildet ist. Das in dem einseitig geschlossenen Rohr angeordnete Thermoelement besteht für die Anwendung bei den in Metallschmelzen herrschenden hohen Temperaturen aus teuren Materialien wie Platin. Insbesondere bei kontinuierlichen Temperaturmessungen, die für eine ständige Kontrolle der Metallschmelze notwendig sind, wird das Thermoelement im Inneren der beschriebenen Anordnung nicht ausreichend geschützt, da insbesondere reaktive bzw. korrosive Gase die das Thermoelement umgebenden Hüllen durchdringen und dabei die Hüllen und das Thermoelement zerstören können. Deshalb kann ein mehrfaches Auswechseln des Thermoelementes notwendig werden. Unter dem Einfluß der hohen Temperaturen in der Metallschmelze bilden sich innerhalb des Schutzkörpers der Vorrichtung beispielsweise Siliziummonoxid und Kohlenmonoxid, die das das Thermoelement umgebende Rohr aus Aluminiumoxid durchdringen. Dabei erhöht das Kohlenmonoxid die Porosität dieses Rohres, wodurch das Rohr langsam zerstört wird. Das Siliziummonoxid reagiert mit dem Thermoelementen-Draht, so daß dieses zerstört wird und die Temperaturmessung fehlerbehaftet bzw. nicht mehr durchführbar ist.

Eine weitere Vorrichtung der eingangs charakterisierten Art ist aus der GB-B 2 193 375 bekannt. Bei dieser Vorrichtung ist das Thermoelement von einem einseitig geschlossenen, mit Keramik beschichteten undurchlässigen Molybdänrohr umgeben, welches in dem Schutzkörper mittels einer Keramikmasse eingebettet ist. Dieses Molybdänrohr ist sehr teuer und in der Herstellung aufwendig. Um eine Zerstörung durch thermomechanische Spannungen zu vermeiden, ist das Molybdänrohr von mehreren Keramikschichten umgeben, die einen nach außen abnehmenden Gehalt an Molybdän aufweisen. Diese Schichten dienen unter anderem dazu, Temperaturgradienten längs des Molybdänrohres zu kompensieren. Diese Keramikschichten und das Molybdänrohr können allerdings ebenfalls durch reaktive Gase, wie Kohlenmonoxid oder Siliziummonoxid zerstört werden.

Die Aufgabe der vorliegenden Erfindung besteht darin, eine Temperaturmeßvorrichtung zu schaffen, bei der das Thermoelement auf einfache Weise vor einer chemischen Zerstörung geschützt und damit die Lebensdauer des Thermoelementes erhöht wird.

Diese Aufgabe wird für die eingangs charakterisierte Vorrichtung gemäß der Erfindung dadurch gelöst, daß das Rohr als keramisches Rohr ausgebildet ist und daß der Ringraum im wesentlichen mit dem Metalloxidpulver und Aluminium als sauerstoffreduzierendes Mittel gefüllt ist, wobei der Anteil des sauerstoffreduzierenden Mittels etwa 15 Vol.-% bis etwa 70 Vol.-%, bezogen auf die Füllung des Ringraumes, beträgt. Dieses sauerstoffreduzierende Mittel verhindert, daß korrosive bzw. reaktive Gase, wie beispielsweise Siliziummonoxid oder Kohlenmonoxid das das Thermoelement umgebende einseitig geschlossene Rohr erreichen und dieses sowie das Thermoelement selbst zerstören. Unter Oxidation des reduzierenden Mittels werden Silizium und Kohlenstoff gebildet, die weder das Thermoelement noch das dieses umgebende Rohr angreifen.

Zweckmäßigerweise ist das sauerstoffreduzierende Mittel pulverförmig ausgebildet und mit dem Metalloxidpulver gemischt. Dadurch ist eine gleichmäßige Veteilung des sauerstoffreduzierenden Mittels in dem Ringraum möglich und eine hohe Effektivität dieses Mittels gewährleistet.

Es ist auch möglich, das sauerstoffreduzierende Mittel in Form von Stäben, die insbesondere parallel zu dem einseitig geschlossenen Rohr angeordnet sind, auszubilden. Auch eine Ausbildung des sauerstoffreduzierenden Mittels in Form von Drähten, Pellets und/oder Körnern, die in dem Metalloxid eingebettet sind, ist möglich. Eine weitere Möglichkeit, das sauerstoffreduzierende Mittel in dem Ringraum unterzubringen, besteht darin, daß dieses Mittel das Metalloxidpulver rohrförmig umfaßt. Das Rohr kann geschlossene oder auch mit Durchbrüchen versehene Zylinderwände aufweisen. Auch die rohrförmige Anordnung eines Pulvers ist denkbar. Auch eine Kombination mehrerer Formen des sauerstoffreduzierenden Mittels ist möglich. Generell ist die Gestalt des reduzierenden Mittels nicht auf die genannten Formen begrenzt. Das reduzierende Mittel soll allerdings über den gesamten Ringraum verteilt sein, um die Wirkung optimal zu gestalten. Es soll lediglich vermieden werden, daß das reduzierende Mittel das einseitig geschlossene Rohr und den Schutzkörper direkt verbindet, da eine solche Verbindung zu Wärmebrücken führen kann, die das einseitig geschlossene Rohr einer ungleichmäßigen thermomechanischen Belastung aussetzen können. Eine demgemäße Isolierung erfolgt durch das Metalloxidpulver.

Zweckmäßig ist es, daß das im Ringraum angeordnete Metalloxidpulver aus einem Oxid oder einer Mischung aus mehreren Oxiden der Gruppe Aluminiumoxid, Magnesiumoxid, Zirkonoxid, Titanoxid gebildet ist. Als besonders zweckmäßig hat sich dabei die Verwendung von Aluminiumoxid erwiesen, da dieses auch sehr kostengünstig ist.

Zweckmäßigerweise beträgt der Aluminiumgehalt, bezogen auf die Füllung des Ringraumes, etwa 25 Vol.-% bis 65 Vol.-%.

Nachfolgend werden Ausführungsbeispiele der Erfindung anhand einer Zeichnung näher erläutert. In der Zeichnung zeigen:
- Figur 1: die schematische Darstellung der Vorrichtung mit sauerstoffreduzierendem Pulver
- Figur 2: eine schematische Darstellung der Vorrichtung mit stabförmigem sauerstoffreduzierenden Mittel
- Figur 3: eine schematische Darstellung der Vorrichtung mit drahfförmigem sauerstoffreduzierenden Mittel
- Figur: eine schematische Darstellung der Vorrichtung, wobei das sauerstoffreduzierende Mittel die Form von Pellets oder Körnern aufweist und
- Figur 5: eine schematische Darstellung der Vorrichtung mit rohrförmiger Anordnung des sauerstoffreduzierenden Mittels.

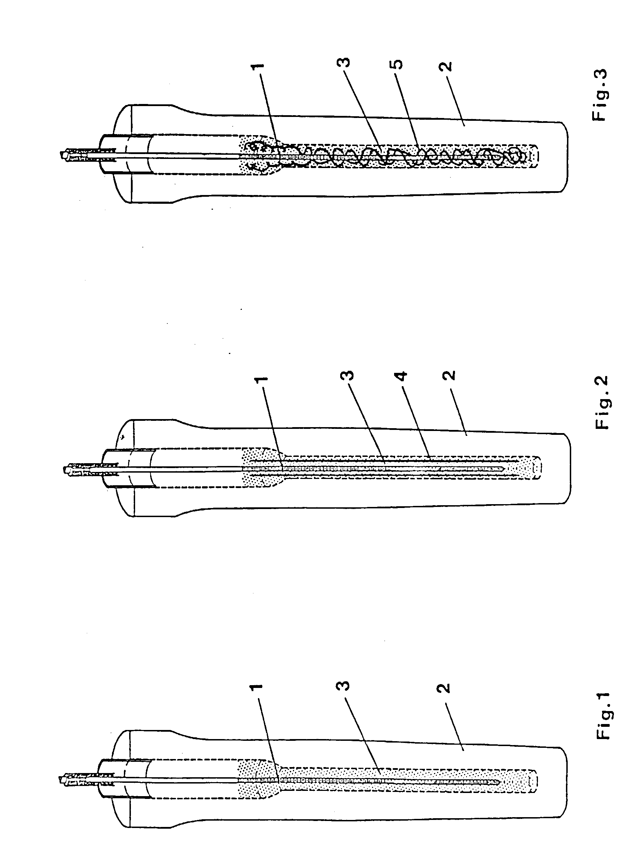

Die in Figur 1 dargestellte Vorrichtung zur Temperaturmessung in Metallschmelzen weist ein Thermoelement auf, das in bekannter Weise in einem nicht dargestellten keramischen Zwillingsrohr angeordnet ist. Dieses ist von einem einseitig geschlossenen Aluminiumoxidrohr 1 umgeben. Die heiße Lötstelle des Thermoelementes befindet sich in der Nähe des geschlossenen Endes des Aluminiumoxidrohres 1.

Das einseitig geschlossene Aluminiumoxidrohr 1 ist in einen Schutzkörper 2 eingesetzt, der aus hitzebeständigem Metalloxid, wie beispielsweise Aluminiumoxid und Graphit besteht. Dieser Schutzkörper 2 weist zum Einsetzen des einseitig geschlossenen Aluminiumoxidrohres 1 einen in Längsrichtung des Schutzkörpers 2 angeordneten Hohlraum auf, der an seinem dem geschlossenen Eintauchende abgewandten Ende den Schutzkörper 2 durchbricht. Durch die so entstandene Öffnung wird das Aluminiumoxidrohr 1 mit dem Thermoelement in den Schutzkörper 2 eingeführt. Der Durchmesser des Hohlraumes ist etwa 8 - 15 mm größer als der Durchmesser des Aluminiumoxidrohres 1. Der dadurch entstehende Ringraum 3 ist mit einer Mischung aus Aluminiumoxidpulver und Aluminiumpulver gefüllt, wobei der Anteil des Aluminiumpulvers an der Füllung etwa 40 - 50 Vol.-% beträgt. Die in Figur 2 dargestellte Vorrichtung unterscheidet sich von der in Figur 1 gezeigten dadurch, daß das reduzierende Mittel nicht in Pulverform vorliegt, sondern in Form von Aluminiumstäben 4, die etwa parallel zu dem Aluminiumoxidrohr 1, welches das Thermoelement beinhaltet, angeordnet sind. Diese Aluminiumstäbe 4 sind in dem Aluminiumoxidpulver eingebettet. Es ist auch denkbar, die Aluminiumstäbe 4 in irgendeiner anderen Weise anzuordnen, jedoch ist die Anordnung parallel zu dem Aluminiumoxidrohr 1 am effektivsten hinsichtlich der reduzierenden Wirkung.

In Figur 3 ist eine ähnliche Vorrichtung dargestellt. Das besondere an dieser Vorrichtung liegt darin, daß das reduzierende Mittel in Form vom Drähten 5 in dem Aluminiumoxidpulver angeordnet ist.

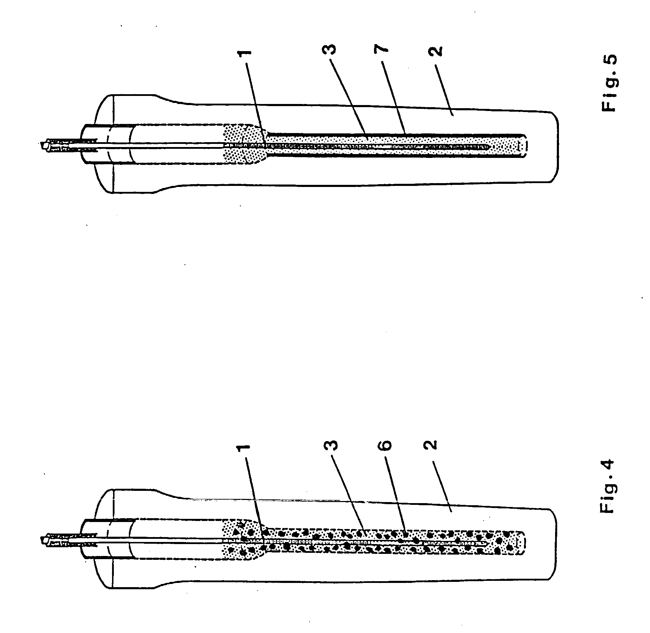

Eine weitere mögliche Form des sauerstoffreduzierenden Mittels ist in Figur 4 dargestellt. Hier ist dieses Mittel in Form von Pellets bzw. Körnern 6 aus Aluminium in dem Aluminiumoxidpulver eingebettet.

Eine weitere, die Vielzahl der Möglichkeiten jedoch nicht vervollständigende Anordnung des sauerstoffreduzierenden Mittels ist in Figur 5 dargestellt. Das sauerstoff reduzierende Mittel ist als Aluminiumrohr 7 um das Aluminiumoxidpulver herum angeordnet. In der Zeichnung ist das Aluminiumrohr 7 ebenfalls nur im Schnitt dargestellt. Es kann sowohl geschlossene als auch mit Durchbrüchen beliebiger Art versehene Zylinderflächen aufweisen. Denkbar ist auch eine rohrförmige Anordnung von Metallpulver.

Bei Erwärmung der Vorrichtung in der Metallschmelze, wie beispielsweise in einer Stahlschmelze, schmilzt das sauerstoffreduzierende Aluminium. Ein Herablaufen der Aluminiumschmelze in die geschlossene Spitze des Schutzkörpers 2 wird jedoch dadurch verhindert, daß diese Aluminiumschmelze sofort in die von dem Aluminiumoxidpulver gebildeten Hohlräume eindringt und dadurch an der Abwärtsbewegung gehindert wird.

## Patentansprüche

1. Vorrichtung zur Temperaturmessung in Metallschmelzen mit einem Thermoelement, welches in einem einseitig geschlossenen Rohr angeordnet ist, wobei die heiße Lötstelle des Thermoelementes in der Nähe des geschlossenen Endes des Rohres angeordnet ist, und mit einem äußeren Schutzkörper, der das einseitig geschlossene Rohr unter Bildung eines ein Metalloxidpulver enthaltenden Ringraumes zwischen dem einseitig geschlossenen Rohr und der inneren Oberfläche des Schutzkörpers umschließt, wobei der Schutzkörper im wesentlichen aus hitzebeständigem Metalloxid und Graphit besteht, dadurch gekennzeichnet, daß das Rohr (7) als keramisches Rohr ausgebildet ist und daß der Ringraum (3) im wesentlichem mit dem Metalloxidpulver und Aluminium als sauerstoffreduzierendem Mittel gefüllt ist, wobei der Anteil des sauerstoffreduzierenden Mittels etwa 15 Vol.-% bis etwa 70 Vol.-%, bezogen auf die Füllung des Ringraumes (3), beträgt.

2. Vorrichtung zur Temperaturmessung nach Anspruch 1, dadurch gekennzeichnet, daß das sauerstoffreduzierende Mittel eine pulverige Form aufweist und mit dem Metalloxidpulver gemischt ist.

3. Vorrichtung zur Temperaturmessung nach Anspruch 1, dadurch gekennzeichnet, daß das sauerstoffreduzierende Mittel als eine Vielzahl von Stäben (4) ausgebildet ist.

4. Vorrichtung zur Temperaturmessung nach Anspruch 3, dadurch gekennzeichnet, daß die Stäbe (4) etwa parallel zur Längsachse des einseitig geschlossenen Rohres (1) angeordnet sind.

5. Vorrichtung zur Temperaturmessung nach Anspruch 1, dadurch gekennzeichnet, daß das sauerstoffreduzierende Mittel die Form von Drähten (5) aufweist, die in dem Metalloxidpulver eingebettet sind.

6. Vorrichtung zur Temperaturmessung nach Anspruch 1, dadurch gekennzeichnet, daß das sauerstoffreduzierende Mittel in Form von Pellets und/oder Körnern (6) in dem Metalloxidpulver eingebettet ist.

7. Vorrichtung zur Temperaturmessung nach Anspruch 1, dadurch gekennzeichnet, daß das sauerstoffreduzierende Mittel das Metalloxidpulver rohrförmig umfaßt.

8. Vorrichtung zur Temperaturmessung nach einem der Ansprüche 1 bis 7, dadurch gekennzeichnet, daß das Metalloxidpulver aus einem Oxid oder einer Mischung aus mehreren Oxiden der Gruppe Aluminiumoxid, Magnesiumoxid, Zirkonoxid, Titanoxid gebildet ist.

9. Vorrichtung zur Temperaturmessung nach einem der Ansprüche 1 bis 8, dadurch gekennzeichnet, daß das Metalloxidpulver aus Aluminiumoxid besteht.

10. Vorrichtung zur Temperaturmessung nach einem der Ansprüche 1 bis 9, dadurch gekennzeichnet, daß der Aluminiumgehalt etwa 25 Vol.-% bis 65 Vol.-% beträgt.

## Claims

1. A device for temperature measurement in molten metals with a thermoelement which is arranged in a tube closed on one side, wherein the hot junction of the thermoelement is arranged in the vicinity of the closed end of the tube, and with an outer protective body which surrounds the tube, closed on one side, with the formation of an annular space, containing a metal oxide powder, between the tube, closed on one side, and the inner surface of the protective body, wherein the protective body consists substantially of heat-resistant metal oxide and graphite, characterised in that the tube (7) is constructed as a ceramic tube and that the annular space (3) is filled substantially with the metal oxide powder and aluminium as oxygen-reducing means, wherein the proportion of the oxygen-reducing means amounts to approximately 15 % by volume to approximately 70 % by volume in relation to the filling of the annular space (3).

2. A device for temperature measurement according to Claim 1, characterised in that the oxygen-reducing means has a pulverulent form and is mixed with the metal oxide powder.

3. A device for temperature measurement according to Claim 1, characterised in that the oxygen-reducing means is formed as a plurality of rods (4).

4. A device for temperature measurement according to Claim 3, characterised in that the rods (4) are arranged approximately parallel to the longitudinal axis of the tube (1) which is closed on one side.

5. A device for temperature measurement according to Claim 1, characterised in that the oxygen-reducing means has the form of wires (5) which are embedded in the metal oxide powder.

6. A device for temperature measurement according to Claim 1, characterised in that the oxygen-reducing means is embedded in the form of pellets and/or grains (6) in the metal oxide powder.

7. A device for temperature measurement according to Claim 1, characterised in that the oxygen-reducing means surrounds the metal oxide powder in a tubular form.

8. A device for temperature measurement according to one of Claims 1 to 7, characterised in that the metal oxide powder is formed from an oxide or from a mixture of several oxides of the group aluminium oxide, magnesium oxide, zirconium oxide, titanium oxide.

9. A device for temperature measurement according to one of Claims 1 to 8, characterised in that the metal oxide powder consists of aluminium oxide.

10. A device for temperature measurement according to one of Claims 1 to 9, characterised in that the aluminium content amounts to approximately 25 % by volume to 65 % by volume.

## Revendications

1. Dispositif pour mesurer la température dans des métaux en fusion, comportant un thermo-élément qui est disposé dans un tube clos d'un côté, dans lequel la soudure chaude du thermo-élément est disposée au voisinage de l'extrémité close du tube et comportant un corps de protection extérieur qui entoure le tube clos d'un côté en formant un espace annulaire, contenant une poudre d'oxyde métallique, entre le tube clos d'un côté et la surface intérieure du corps de protection, dans lequel le corps de protection est essentiellement constitué d'oxyde métallique réfractaire et de graphite, caractérisé par le fait que le tube (7) est prévu sous forme d'un tube céramique et que l'espace annulaire (3) est sensiblement rempli de la poudre d'oxyde métallique et d'aluminium en tant qu'agent réducteur de l'oxygène, la proportion de l'agent réducteur de l'oxygène valant environ 15% en volume à environ 70% en volume, rapporté au remplissage de l'espace annulaire (3).

2. Dispositif pour mesurer la température selon la revendication 1, caractérisé par le fait que l'agent réducteur de l'oxygène présente une forme pulvérulente et qu'il est mélangé à la poudre d'oxyde métallique.

3. Dispositif pour mesurer la température selon la revendication 1, caractérisé par le fait que l'agent réducteur de l'oxygène se présente sous forme d'une pluralité de bâtonnets (4).

4. Dispositif pour mesurer la température selon la revendication 3, caractérisé par le fait que les bâtonnets (4) sont disposés à peu près parallèlement à l'axe longitudinal du tube (1) clos d'un côté.

5. Dispositif pour mesurer la température selon la revendication 1, caractérisé par le fait que l'agent réducteur de l'oxygène présente la forme de fils métalliques (5) enrobés dans la poudre d'oxyde métallique.

6. Dispositif pour mesurer la température selon la revendication 1, caractérisé par le fait que l'agent réducteur de l'oxygène est, sous forme de granulés et/ou de grenailles (6), enrobé dans la poudre d'oxyde métallique.

7. Dispositif pour mesurer la température selon la revendication 1, caractérisé par le fait que l'agent réducteur de l'oxygène, sous forme tubulaire, enserre la poudre d'oxyde métallique.

8. Dispositif pour mesurer la température selon l'une des revendications 1 à 7, caractérisé par le fait que la poudre d'oxyde métallique est formée d'un oxyde ou d'un mélange de plusieurs oxydes du groupe oxyde d'aluminium, oxyde de magnésium, oxyde de zirconium, oxyde de titane.

9. Dispositif pour mesurer la température selon l'une des revendications 1 à 8, caractérisé par le fait que la poudre d'oxyde métallique est constituée d'oxyde d'aluminium.

10. Dispositif pour mesurer la température selon l'une des revendications 1 à 9, caractérisé par le fait que la teneur en aluminium vaut environ 25% en volume à 65% en volume.
